# EUROPÄISCHE PATENTSCHRIFT

(11) **EP 1 683 689 B1**
(45) Veröffentlichungstag und Bekanntmachung des Hinweises auf die Patenterteilung: **18.07.2007**
(21) Anmeldenummer: 05026797.0
(22) Anmeldetag: 08.12.2005
(51) Int. Cl.: B60R 21/20, B60R 21/16, B60R 21/00

(54) **Sicherheitsanordnung für ein Kraftfahrzeug**
Safety arrangement for a vehicle
Agencement de sécurité pour véhicule

(30) Priorität: 19.01.2005 DE 102005002705
(43) Veröffentlichungstag der Anmeldung: 26.07.2006
(73) Patentinhaber: Benteler Automobiltechnik GmbH, 33104 Paderborn (DE)
(72) Erfinder: Hilgenberg, Stefan, 33102 Paderborn (DE); Linstromberg, Meik, 63743 Aschaffenburg (DE); Schwarz, Stefan, 72655 Altdorf (DE)
(74) Vertreter: Griepenstroh, Jörg

(56) Entgegenhaltungen:
- EP-A- 1 145 921
- DE-A1- 10 039 810
- DE-A1- 19 547 494
- DE-A1- 19 725 122
- DE-C1- 10 119 351
- US-A1- 2003 107 209

## Beschreibung

Die Erfindung betrifft eine Sicherheitsanordnung für ein Kraftfahrzeug mit den Merkmalen im Oberbegriff des Patentanspruchs 1.

Durch die DE 195 47 494 C2 zählt eine Schutzeinrichtung für die Insassen eines Kraftfahrzeugs mit mindestens an einem Ende karosseriefest gehaltenen Fang- und Aufpralleinrichtungen zum Stand der Technik. Die Fang- und Aufpralleinrichtungen sind hinter seitlichen Tragstrukturen der Karosserie gehalten und sind durch eine Verstelleinrichtung in eine Wirkposition bewegbar. In der Wirkposition liegen sie im Kopfbereich der Fahrzeuginsassen und in einer im Bereich der Seitenfensteröffnungen verlaufenden Ebene. Sie umfassen einen, im nicht aufgeblasenen Zustand nahe der Türbrüstung angeordneten schlauchförmigen Airbag, der mit seinem vorderen Ende fest an der Tür und mit seinem hinteren Ende an einer Anlenkstelle der Verstelleinrichtung gehalten ist. Die Verstelleinrichtung ist mindestens zum Zeitpunkt des Aufblasens des Airbags bis zu einer Höhe nach oben bewegbar, in der die Anlenkstelle etwa in einer durch die Fensteroberkante verlaufenden Horizontalebene liegt. Die Verstelleinrichtung ist eine mechanisch bewegbare Schubstange, die in einer Führung verschiebbar ist, welche an wenigstens einem Ende relativ zur Tür festgehalten ist und die von der Türbrüstung aus nach unten ragt. Nachteilig bei einem schlauchförmigen Airbag ist, dass ein offener dreieckförmiger Bereich zwischen dem oberen Ende der Schubstange und der Frontscheibe verbleibt, in welchem der Kopf des Insassen vollkommen ungeschützt ist. In Ermangelung eines Dachrahmens ist es bei Cabrios allerdings ausgesprochen problematisch, die aus geschlossenen Personenkraftwagen bekannten Seitenairbagkonfigurationen auch nur ansatzweise auf Cabrios zu übertragen, da der Airbag keinen genügenden Halt findet und insbesondere bei einem Aufprall kein Widerlager besitzt.

Aus der DE 198 43 111 A1 ist ein Kopfschutz für ein Kraftfahrzeug mit einem schlauchförmigen Luftsack bekannt. Die beiden Enden des Luftsackes sind mit einem vorderen oberen und einem hinteren unteren Bereich der Tür verbunden. Hierdurch entsteht ein maximal dreieckförmiger Schutzbereich, welcher aus den zuvor genannten Gründen ebenfalls nicht geeignet ist, einen optimalen Insassenschutz zu gewährleisten. Zwar wird vorgeschlagen, dass der hintere Befestigungspunkt an einem in der Tür verschiebbar gelagerten Teil angeordnet ist, welches bei einem Seitenaufprall nach oben ausfahrbar ist. Allerdings verbleibt unter Verwendung eines einzigen schlauchförmigen Luftsackes immer ein erheblicher Freiraum oberhalb der Türbrüstung, so dass optimaler Insassenschutz nicht möglich ist. Es ist zwar denkbar, einen Airbag in Curtain-Bauweise zu verwenden, der aus der Türbrüstung nach oben ausfährt, allerdings wäre das einzige Gegenlager des Airbags die Seitenscheibe, sofern sie überhaupt geschlossen ist. Auch ein solcher Airbag könnte daher ebenfalls keine hinreichende Insassensicherheit gewährleisten.

Hiervon ausgehend liegt der Erfindung die Aufgabe zugrunde, eine Sicherheitsanordnung für ein Kraftfahrzeug, insbesondere für ein Cabrio aufzuzeigen, bei welcher der Airbag in seiner Wirkstellung einen verbesserten Insassenschutz gewährleistet und ein hinreichendes Gegenlager zur Aufnahme von Anprallkräften aufweist.

Diese Aufgabe ist bei einer Sicherheitsanordnung mit den Merkmalen des Patentanspruchs 1 gelöst. Vorteilhafte Ausgestaltungen des Erfindungsgedankens sind Gegenstand der Unteransprüche.

Die erfindungsgemäße Sicherheitsanordnung für ein Kraftfahrzeug umfasst einen Airbag, welcher bei Aktivierung von seiner Ruhestellung in der Tür des Kraftfahrzeugs in seine Wirkstellung oberhalb der Türbrüstung verlagert wird. Dabei erstreckt sich der aktivierte Airbag zwischen einer A-Säule und einer weiteren Stützsäule, die im Abstand zur A-Säule aus der Seitenstruktur des Kraftfahrzeugs heraus in eine über die Türbrüstung hinausragende Wirkstellung verlagerbar ist. Wesentlich bei der erfindungsgemäßen Sicherheitsanordnung ist, dass der Airbag in Curtain-Bauweise einen Vorhang bildet, welcher sich oberhalb der Türbrüstung bis in Kopfbereichhöhe eines Insassen des Kraftfahrzeugs erstreckt. Dabei ist der Airbag über mehrere als Gegenlager fungierende Anbindungen einerseits an der A-Säule oder einem mit der A-Säule verbundenen Seitenscheibenrahmen und andererseits über mehrere als Gegenlager fungierende Anbindungen an der Stützsäule abgestützt. Ein Airbag in Curtain-Bauweise kann durch die Führung an der Stützsäule und der A-Säule bzw. einem Seitenscheibenrahmen von unten nach oben ausgefahren werden und erfährt über seine gesamte Höhe eine Abstützung durch die mehrfache Anbindung.

Die Stützsäule erstreckt sich vorzugsweise bis etwa zur Horizontalebene der Oberkante der A-Säule. Allein durch eine derart weit ausgefahrene Stützsäule ist bei einem Unfall mit Überschlag eine zusätzliche Überschlagsicherung gegeben. Insbesondere bei Überschlägen ist der Kopfbereich der Insassen einem sehr hohem Verletzungsrisiko ausgesetzt. Es ist daher vorgesehen, dass sich die Oberkante des Airbags zwischen dem oberen Ende der Stützsäule und dem oberen Ende der A-Säule erstreckt. Ein derart hochgezogen ausgeführter Airbag füllt den ganzen Bereich zwischen der Stützsäule und der A-Säule und lässt anders als im eingangs beschriebenen Stand der Technik keine dreieckförmigen Bereiche frei. Dadurch ist der Insassenschutz erheblich verbessert. Entscheidend ist auch, dass der Airbag nicht nur an der Türbrüstung bzw. an den oberen Enden der über die Türbrüstung hinaus ragenden Stützsäulen fixiert ist, sonderen an seinen vorderen und hinteren, im wesentlichen vertikal verlaufenden Längskanten. Die A-Säule oder ein mit der A-Säule verbundener Seitenscheibenrahmen und die Stützsäule weisen daher Führungsnuten auf, in welchen den Airbag an seinen Längsseiten halternde Anbindungen geführt sind. Bei der Expansion des Airbags kann dieser ähnlich einem beidseitig geführten Vorhang zwischen der Stützsäule und der A-Säule gehalten werden. Hierzu sind mehrere, im Abstand zueinander angeordnete, vorzugsweise laschenartige Anbindungen vorgesehen. Insbesondere, wenn der Airbag von mehreren aneinander gereihten Schlauchabschnitten gebildet ist, kann jedem Schlauchabschnitt endseitig eine solche Anbindung zugeordnet sein.

Bei der Expansion des Airbags werden diese Anbindungen entweder durch den Airbag selbst in die Führungen verlagert, so dass der Airbag seine Aktivierungsposition selbstätig einnimmt. Hierbei kann der Airbag die Stützsäule durch die Expansion gewissermaßen mitschleppen und dadurch in die Wirkstellung verlagern. In der Wirkstellung ist die Stützsäule zu verriegeln, um zusätzliche Sicherheit bei einem Überschlag zu schaffen.

Grundsätzlich ist es aber auch möglich, dass der Airbag durch Ausfahren der Stützsäule in die Wirkstellung verlagerbar ist. Das heißt, dass der Airbag mit den endseitigen Anbindungen von der Stützsäule in die Wirkstellung gezogen wird. Auch an der ortsfesten A-Säule bzw. dem ortsfesten Seitenscheibenrahmen können Mittel vorgesehen sein, um den Airbag aktiv in die Führungsnuten zu ziehen und in die Wirkstellung zu überführen.

Ein zusätzliches Gegenlager kann dadurch geschaffen werden, dass bei aktiviertem Airbag wenigstens eine zwischen der A-Säule oder dem mit der A-Säule verbundenen Seitenscheibenrahmen und der Stützsäule verlaufendende Querstrebe auf der den Insassen abgewandten Seite des Airbags angeordnet ist. Die Querstrebe kann entweder durch einen Verlagerungsmechanismus zusammen mit dem Airbag verlagert werden oder durch den Airbag selbst bei seiner Expansion mitgeschleppt werden. Die Querstrebe verläuft vorzugsweise diagonal, d.h. im Winkel zur Horizontalebene und kreuzt sich darüber hinaus mit wenigstens einer weiteren Querstrebe.

Insbesondere sind die Querstreben in ihrem Kreuzungspunkt gelenkig miteinander verbunden. In einer vorteilhaften Ausführungsform können diese kreuz-oder scherenartig aus der Seitenstruktur des Kraftfahrzeugs ausfahren und stützen den Airbag auch besonders in seinem nachgiebigeren mittleren Bereich zusätzlich ab. Die Querstreben bilden ein aussteifendes Fachwerk, das sich zwischen den über die Türbrüstung herausragenden Säulen erstreckt.

Die Querstreben können druckfest ausgestaltet sein, um die oberen Enden der A-Säule und der Stützsäule zusätzlich gegenüber der Türbrüstung abzustützen. Grundsätzlich ist es allerdings ausreichend, die Querstreben beispielsweise in Form von textilen Bändern lediglich zugfest auszubilden, um die seitliche Nachgiebigkeit des Airbags durch Schaffung eines Gegenlagers zu reduzieren.

Optional kann die Stützsäule wenigstens einen quer abstehenden, sich über die Anbindungen hinaus erstreckenden und den Airbag hintergreifenden Gegenlagerschenkel aufweisen. Der Gegenlagerschenkel ist vorzugsweise am kopfseitigen Ende der Stützsäule angeordnet. Dadurch ist die Stützsäule im Wesentlichen L-förmig konfiguriert und unterstützt den besonders sensiblen Kopfaufprallbereich.

Die Stützsäule selbst kann als einzelnes Bauteil aus der Seitenstruktur des Kraftfahrzeugs, insbesondere aus der Tür oder aus einem dem der Tür benachbarten Bereich der Seitenstruktur nach oben über die Türbrüstung ausgefahren werden. Es ist allerdings auch möglich, dass die Stützsäule beim Ausfahren an einer B-Säule geführt und auch in ihrer Wirkstellung an der B-Säule gehalten ist. Auf diese Weise kann die Stützsäule leichter und gewichtssparender konstruiert werden, da die bei einem Kopfaufprall auftretenden Biegemomente im Übergangsbereich zur Türbrüstung zugleich von der B-Säule aufgenommen werden.

In einer als vorteilhaft angesehenen Ausführungsform ist der Airbag in seiner Erstreckung nach oben nicht durch die Höhe der A-Säule bzw. durch einen mit der A-Säule verbundenen Seitenscheibenrahmen begrenzt. Vielmehr kann der Airbag auch über die A-Säule hinaus an einem oberen Querrahmen der Frontscheibe angeschlagen werden, der eine entsprechende Führungsnut zur Aufnahme der erforderlichen Anbindungen aufweist. Auf diese Weise kann ein dreieckförmiger, sich in einer Horizontaleben erstreckender Bereich überspannt werden, dessen Eckpunkte von dem oberen Ende der Stützsäule, dem oberen Ende der A-Säule und dem oberen Querrahmen der Frontscheibe begrenzt ist. Es wird quasi ein durch den Airbag gebildeter Dachbereich geschaffen, der besonders dazu geeignet ist, den Kopf eines Insassen bei einem Anprall, insbesondere bei einem Überschlag des Kraftfahrzeugs zu schützen. Gegenüber dem Stand der Technik hat die erfindungsgemäße Sicherheitsanordnung den Vorteil einer großen Abdeckung des Kopfbereiches, auch unter Berücksichtigung der verschiedenen Sitzpositionen eines 5% - 95% Dummys.

Durch die erfindungsbedingte Anbindung des Airbags in Curtain-Bauweise ist ein Auspendeln des Kopfes im Gegensatz zum Kopf-Thorax-Seitenairbag nicht möglich. Die erfindungsgemäße Sicherheitsanordnung kann als Überrollschutz ausgelegt werden und den Überlebensraum bei einem Überschlag sichern. Hierdurch können herkömmliche Überrollbügel oder ausfahrbare Kopfstützen ersetzt werden. In diesem Fall ist die Stützsäule hinreichend stabil ausgeführt. Als Werkstoff eignen sich insbesondere warmgeformte Stähle, um dem im Kraftfahrzeugbau erforderlichen Leichtbau gerecht zu werden. Die Sicherheitsanordnung kann bei entsprechender Auslegung auch für Fondpassagiere Schutz bieten, wenn die Stützsäule nicht im Bereich der B-Säule, sondern in Längsrichtung der Seitenstruktur weiter zurück versetzt, d.h. in Richtung C-Säule angeordnet ist. Der Airbag einer solchen Ausführungsform ist dann nicht im Bereich der Türbrüstung angeordnet. Grundsätzlich kann der Airbag als Seitenairbag ausgelegt sein, der sich zumindest in dieser Ausführungsform auch unterhalb der Türbrüstung erstreckt.

Die Verlagerung der Stützsäule kann durch einen, z.B. pneumatischen, pyrotechnischen oder federtechnischen Aktuator erfolgen. Der Vorteil von pneumatischen Aktuatoren ist ihre Reversibilität und, dass in der deaktivierten Position keine permanente Aktivierungskraft anliegt. Das hat den Vorteil, dass die Struktur während der Deaktivierung ohne Krafteinfluss ist. Pyrotechnische Mittel haben ebenfalls diesen Vorteil, allerdings sind sie nicht reversibel. Federsysteme besitzen eine hohe Zuverlässigkeit, müssen allerdings verriegelt werden und leiten daher permanent Kräfte in die umgebende Struktur ein. Die Stützsäule selbst ist vorzugsweise aus einem metallischen Werkstoff gefertigt. Selbstverständlich ist auch der Einsatz nichtmetallischer Werkstoffe denkbar. Bei Verwendung metallischer Werkstoffe eignen sich insbesondere hochfeste Bleche, gezogene Profile oder Rohre. Die Führung der Stützsäule kann über ihre Länge bereichsweise innerhalb der Seitenstruktur erfolgen. Selbstverständlich ist es auch möglich, die Stützsäule über ihre komplette Länge, beispielsweise in einem Rohr oder zwischen Führungsleisten zu realisieren.

Die Erfindung wird nachfolgend anhand der in den Zeichnungen schematisch dargestellten Ausführungsbeispiele näher erläutert.

Es zeigen:
- Figur 1: einen Ausschnitt einer Seitenstruktur eines Kraftfahrzeugs und
- Figuren 2 bis 5: weitere Darstellungen von Seitenstrukturen mit Sicherheitsanordnungen unteschiedlicher Ausführungsformen.

Die Seitenstruktur 1 umfasst eine Tür 2 eines nicht näher dargestellten Kraftfahrzeugs, sowie ein sich in Richtung Heck erstreckendes Seitenstrukturbauteil 3, das sich bis zur Höhe der Türbrüstung 4 der Tür 2 erstreckt. Des Weiteren umfasst die Seitenstruktur 1 eine A-Säule 5 und eine sich vom oberen Ende 6 der A-Säule 5 in Richtung der Türbrüstung 4 erstreckenden Seitenscheibenrahmen 7 sowie eine B-Säule 8, die benachbart der Tür 2 an dem Seitenstrukturbauteil 3 über die Türbrüstung 4 nach oben vorsteht. Zwischen der B-Säule 8 und dem Seitenscheibenrahmen 7 erstreckt sich eine Sicherheitsanordnung 9 mit einem Airbag 10 in Curtain-Bauweise.

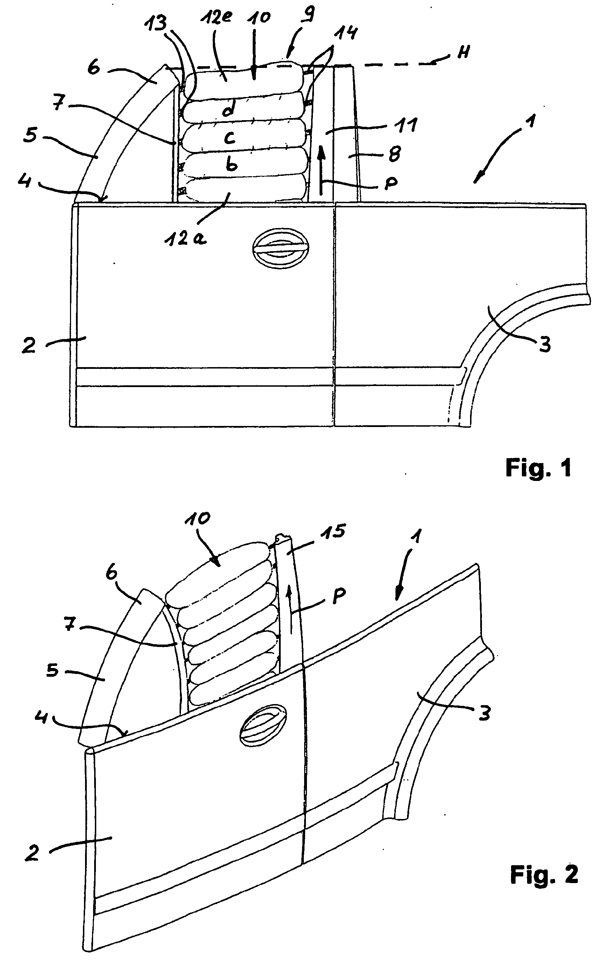

Figur 1 zeigt den Airbag 10, der von seiner Ruhestellung in eine Wirkstellung oberhalb der Türbrüstung 4 verlagert worden ist. Der dermaßen aktivierte Airbag 10 ist zwischen dem Seitenscheibenrahmen 7 und einer Stützsäule 11 aufgespannt, die parallel zur B-Säule 8 verläuft. Die B-Säule 8 und die Stützsäule 11 ragen in gleicher Höhe über die Türbrüstung 4 hinaus und erstrecken sich etwa bis in die Horizontalebene H des oberen Endes 6 der A-Säule 5. Bei einer Aktivierung des Airbags 10 wird die Stützsäule 11 in Richtung des Pfeils P aus der Tür 2 nach oben ausgefahren und der Airbag 10 in die dargestellte Wirkstellung verlagert. Der Airbag 10 besteht aus einer Aneinanderreihung von Schlauchabschnitten 12a-e, wobei sich die Schlauchabschnitte 12a-e im Wesentlichen parallel zur Türbrüstung 4 erstrecken und jeweils über endseitige Anbindungen 13, 14 sowohl mit dem Seitenscheibenrahmen 7 als auch mit der Stützsäule 11 verbunden sind. Durch die Anbindungen 13, 14 sind die einzelnen Schlauchabschnitte 12a-e an ihren Enden und dadurch der Airbag 10 mehrfach an den über die Türbrüstung 4 nach oben ragenden Vertikalaufbauten gelagert. Dadurch entsteht ein im Wesentlichen geschlossener Vorhang, der sich nicht nur an einer Seitenscheibe, sondern insbesondere auch an der tragenden Struktur des Kraftfahrzeugs abstützt und bei einem Überschlag eine verbesserte Sicherheit bietet.

Die Ausführungsform der Figur 2 unterscheidet sich von derjenigen der Figur 1 dadurch, dass keine B-Säule vorhanden ist. Im Übrigen wurden für gleich bleibende Komponenten die gleichen Bezugszeichen benutzt. Dieses Ausführungsbeispiel soll verdeutlichen, dass bei einem Cabrio eine verstärkte Stützsäule 15 zum Einsatz kommen kann, die gleichzeitig als Ersatz für andere Rollover-Schutzmaßnahmen, insbesondere Überrollbügel und ausfahrbare Kopfstützen dienen kann. In diesem Ausführungsbeipiel ist die Stützsäule 15 im Querschnitt T-förmig konfiguriert.

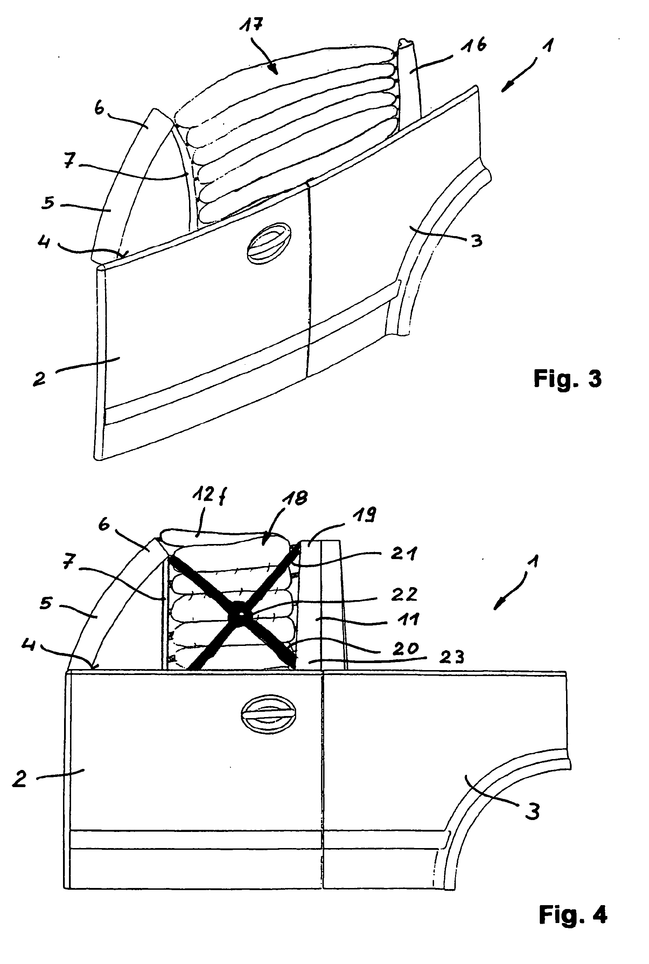

Figur 3 zeigt eine Abwandlung der Bauform der Figur 2. Die dort dargestellte Stützsäule 16 ist nicht im Bereich der B-Säule bzw. der Tür 2 angeordnet, sondern entgegengesetzt der Fahrtrichtung zurück versetzt an dem Strukturbauteil 3 vorgesehen. Der Airbag 17 schützt in diesem Ausführungsbeispiel nicht nur den Fahrer, sondern auch nicht näher dargestellte Fondpassagiere. Der Airbag 17 ist entsprechend länger ausgeführt als in der Ausführungsform der Figuren 1 und 2.

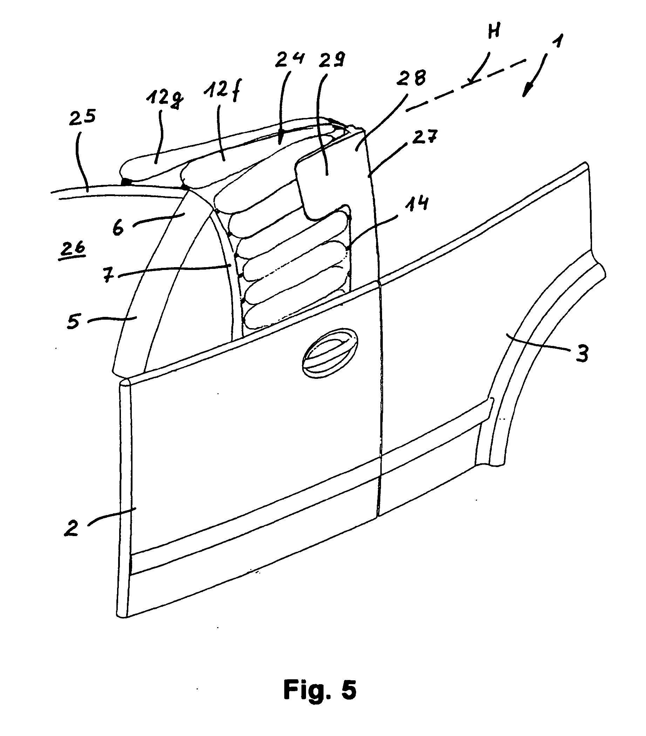

Die Ausführungsform der Figur 4 zeigt eine Weiterentwicklung der Ausführungsform der Figur 1, bei welcher der Airbag 18 einen weiteren Schlauchabschnitt 12 f aufweist, der sich vom oberen Ende 19 der Stützsäule 11 bis in den nicht näher dargestellten Seitenscheibenrahmenbereich der Frontscheibe des Kraftfahrzeugs erstreckt. Diese Variante wird nachfolgend in Figur 5 ausführlich erläutert. Zusätzlich ist ein aus Querstreben 20, 21 gebildetes Stützkreuz vorgesehen. Die Querstreben 20, 21 sind in ihrem Kreuzungspunkt 22 gelenkig miteinander verbunden und werden bei Aktivierung des Airbags und beim Ausfahren der Stützsäule 11 aus der Tür 2 scherenartig aus der Tür 2 über die Türbrüstung 4 nach oben verlagert. Eine der Querstreben 21 erstreckt sich von der Türbrüstung 4 zum oberen Ende 19 der Stützsäule 11. Die zweite Querstrebe 20 verläuft im Wesentlichen rechtwinklig zur ersten Querstrebe 21 und erstreckt sich vom unteren Ende 23 der Stützsäule 11 bis zum oberen Ende 6 der A-Säule 5.

Figur 5 zeigt eine Ausführungsform eines Airbags 24 mit zwei weiteren Schlauchabschnitten 12 f und 12 g, die über das obere Ende 6 der A-Säule 5 hinausragen und an einem oberen Querrahmen 25 der Frontscheibe 26 angeschlagen sind. Dadurch wird der Überdeckungsgrad des Airbags 24 erhöht. Die Überdeckung erfolgt nicht nur in der der Seitenstruktur entsprechenden Vertikalebene, sondern zusätzlich auch in der durch den oberen Querrahmen 25 aufgespannten Horizontalebene H. Des Weiteren ist zu erkennen, dass die dargestellte Stützsäule 27 an ihrem oberen Ende 28 einen quer abstehenden, sich über die Anbindungen 14 des Airbags 24 hinaus erstreckenden und den Airbag 24 hintergreifenden Gegenlagerschenkel 29 aufweist. Der Gegenlagerschenkel 29 dient zur zusätzlichen Abstützung des Airbags 24 im Kopfbereich des Insassen. Die Stützsäule 27 ist im Bereich des Gegenlagerschenkels 29 etwa dreifach verbreitert ausgeführt, wobei sich der Gegenlagerschenkel 29 etwa über ein Drittel der Gesamthöhe der Stützsäule 27 erstreckt.

### Bezugszeichen:

- 1 -: Seitenstruktur
- 2 -: Tür
- 3 -: Strukturbauteil
- 4 -: Türbrüstung v. 2
- 5 -: A-Säule
- 6 -: oberes Ende v. 5
- 7 -: Seitenscheibenrahmen
- 8 -: B-Säule
- 9 -: Sicherheitsanordnung
- 10 -: Airbag
- 11 -: Stützsäule
- 12 a -: Schlauchabschnitt v. 10
- 12 b -: Schlauchabschnitt v. 10
- 12 c -: Schlauchabschnitt v. 10
- 12 d -: Schlauchabschnitt v. 10
- 12 e -: Schlauchabschnitt v. 10
- 12 f -: Schlauchabschnitt v. 18, 24
- 12 g -: Schlauchabschnitt v. 18, 24
- 13 -: Anbindung zw. 7 u. 12
- 14 -: Anbindung zw. 11 u. 12
- 15 -: Stützsäule
- 16 -: Stützsäule
- 17 -: Airbag
- 18 -: Airbag
- 19 -: oberes Ende v. 11
- 20 -: Querstrebe
- 21 -: Querstrebe
- 22 -: Kreuzungspunkt v. 20, 21
- 23 -: unteres Ende v. 19
- 24 -: Airbag
- 25 -: Querrahmen v. 26
- 26 -: Frontscheibe
- 27 -: Stützsäule
- 28 -: oberes Ende v. 27
- 29 -: Gegenlagerschenkel

- H -: Horizontalebene
- P -: Pfeil

## Patentansprüche

1. Sicherheitsanordnung für ein Kraftfahrzeug mit einem Airbag, welcher bei Aktivierung von seiner Ruhestellung in der Tür (2) des Kraftfahrzeugs in seine Wirkstellung oberhalb einer Türbrüstung (4) verlagert wird, wobei sich der aktivierte Airbag (10, 17, 18, 24) zwischen einer A-Säule (5) und einer weiteren Stützsäule (11, 15, 16, 19, 27) erstreckt, die im Abstand zur A-Säule (5) aus der Seitenstruktur des Kraftfahrzeugs heraus in eine über die Türbrüstung (4) hinaus ragende Wirkstellung verlagerbar ist, **dadurch gekennzeichnet, dass** der Airbag (10, 17, 18, 24) in der Wirkstellung einen Vorhang bildet, welcher sich oberhalb der Türbrüstung (4) bis in die Kopfbereichhöhe eines Insassen des Kraftfahrzeugs erstreckt, wobei die Oberkante des Airbags sich zwischen dem oberen Ende der Stützsäule und dem oberen Ende der A-Säule erstreckt, wobei der Airbag (10, 17, 18, 24) in der Wirkstellung über mehrere als Gegenlager fungierende Anbindungen (13) einerseits an der A-Säule (5) oder einem mit der A-Säule (5) verbundenen Seitenscheibenrahmen (7) und andererseits über mehrere als Gegenlager fungierende Anbindungen (14) an der Stützsäule (11, 15, 16, 19, 27) abgestützt ist und wobei die A-Säule (5) oder der mit der A-Säule (5) verbundene Seitenscheibenrahmen (7) und die Stützsäule (11, 15, 16, 19, 27) Führungsnuten aufweisen, in welchen die den Airbag (10, 17, 18, 24) an seinen Längsseiten haltenden Anbindungen (13, 14) geführt sind.

2. Sicherheitsanordnung nach Anspruch 1, **dadurch gekennzeichnet, dass** bei aktiviertem Airbag (10, 17, 18, 24) wenigstens eine zwischen der A-Säule (5) oder der mit der A-Säule (5) verbundenen Seitenscheibenrahmen (7) und der Stützsäule (19) verlaufende Querstrebe (20, 21) auf der den Insassen abgewandten Seite des Airbags (18) angeordnet ist.

3. Sicherheitsanordnung nach Anspruch 2, **dadurch gekennzeichnet, dass** die Querstreben (20, 21) zwischen der A-Säule (5) oder dem mit der A-Säule (5) verbundenen Seitenscheibenrahmen (7) und der Stützsäule (19) diagonal verlaufen.

4. Sicherheitsanordnung nach Anspruch 3, **dadurch gekennzeichnet, dass** sich die Querstreben (20, 21) kreuzen.

5. Sicherheitsanordnung nach Anspruch 4, **dadurch gekennzeichnet, dass** die Querstreben (20, 21) in ihrem Kreuzungspunkt (22) miteinander gelenkig verbunden sind.

6. Sicherheitsanordnung nach einem der Ansprüche 1 bis 5, **dadurch gekennzeichnet, dass** der aktivierte Airbag (18, 24) mit seiner in Fahrtrichtung vorderen Längsseite an der A-Säule (5) oder dem mit der A-Säule (5) verbundenen Seitenscheibenrahmen (7) und an einem oberen Querrahmen (25) der Frontscheibe (26) gehalten ist.

7. Sicherheitsanordnung nach einem der Ansprüche 1 bis 6, **dadurch gekennzeichnet, dass** die Stützsäule (27) wenigstens einen quer abstehenden, sich über die Anbindungen (14) hinaus erstreckenden und den Airbag (24) hintergreifenden Gegenlagerschenkel (29) aufweist.

8. Sicherheitsanordnung nach Anspruch 7, **dadurch gekennzeichnet, dass** der Gegenlagerschenkel (29) am kopfseitigen Ende (28) der Stützsäule (27) angeordnet ist.

9. Sicherheitsanordnung nach einem der Ansprüche 1 bis 8, **dadurch gekennzeichnet, dass** die Stützsäule (11) in ihrer Wirkstellung an einer B-Säule (8) geführt und gehalten ist.

10. Sicherheitsanordnung nach einem der Ansprüche 1 bis 9, **dadurch gekennzeichnet, dass** der Airbag (10, 17, 18, 24) von mehreren aneinander gereihten Schlauchabschnitten (12 a-g) gebildet ist, wobei jedem Schlauchabschnitt (12 a-g) endseitig eine Anbindung (13, 14) zugeordnet ist.

11. Sicherheitseinrichtung nach einem der Ansprüche 1 bis 10, **dadurch gekennzeichnet, dass** die Stützsäule durch Expansion des Airbags in die Wirkstellung verlagerbar ist.

12. Sicherheitseinrichtung nach einem der Ansprüche 1 bis 11, **dadurch gekennzeichnet, dass** der Airbag durch Ausfahren der Stützsäule in die Wirkstellung verlagerbar ist.

## Claims

1. Safety arrangement for a vehicle, with an airbag which, upon activation, is displaced from its inoperative position in the door (2) of the motor vehicle into its active position above a door breast (4), the activated airbag (10, 17, 18, 24) extending between an A-pillar (5) and a further supporting pillar (11, 15, 16, 19, 27) which can be displaced at a distance from the A-pillar (5) out of the side structure of the vehicle into an active position protruding above the door breast (4), **characterized in that**, in the active position, the airbag (10, 17, 18, 24) forms a curtain which extends above the door breast (4) into the head region height of an occupant of the vehicle, the upper edge of the airbag extending between the upper end of the supporting pillar and the upper end of the A-pillar, the airbag (10, 17, 18, 24), in the active position, firstly being supported, via a plurality of connections (13) acting as counter bearings, on the A-pillar (5) or on a side window frame (7) connected to the A-pillar (5), and secondly being supported, via a plurality of connections (14) acting as counter bearings, on the supporting pillar (11, 15, 16, 19, 27), and the A-pillar (5) or the side window frame (7) connected to the A-pillar (5) and the supporting pillar (11, 15, 16, 19, 27) having guide grooves in which the connections (13, 14), which hold the airbag (10, 17, 18, 24) on its longitudinal sides, are guided.

2. Safety arrangement according to Claim 1, **characterized in that**, when the airbag (10, 17, 18, 24) is activated, at least one cross strut (20, 21) running between the A-pillar (5) or the side window frame (7) connected to the A-pillar (5) and the supporting pillar (19) is arranged on that side of the airbag (18) which faces away from the occupant.

3. Safety arrangement according to Claim 2, **characterized in that** the cross struts (20, 21) run diagonally between the A-pillar (5) or the side window frame (7) connected to the A-pillar (5) and the supporting pillar (19).

4. Safety arrangement according to Claim 3, **characterized in that** the cross struts (20, 21) intersect.

5. Safety arrangement according to Claim 4, **characterized in that** the cross struts (20, 21) are connected to each other in an articulated manner at their intersecting point (22).

6. Safety arrangement according to one of Claims 1 to 5, **characterized in that** the activated airbag (18, 24) is held by its longitudinal side which is in front in the direction of travel on the A-pillar (5) or the side window frame (7) connected to the A-pillar (5) and on an upper cross frame (25) of the windscreen (26).

7. Safety arrangement according to one of Claims 1 to 6, **characterized in that** the supporting pillar (27) has at least one counter bearing limb (29) which protrudes transversely, extends beyond the connections (14) and engages behind the airbag (24).

8. Safety arrangement according to Claim 7, **characterized in that** the counter bearing limb (29) is arranged at the head end (28) of the supporting pillar (27).

9. Safety arrangement according to one of Claims 1 to 8, **characterized in that**, in its active position, the supporting pillar (11) is guided and held on a B-pillar (8) .

10. Safety arrangement according to one of Claims 1 to 9, **characterized in that** the airbag (10, 17, 18, 24) is formed by a plurality of tube sections (12a-g) which are arranged next to one another in a row, with the end side of each tube section (12a-g) being assigned a connection (13, 14).

11. Safety arrangement according to one of Claims 1 to 10, **characterized in that** the supporting pillar can be displaced into the active position by expansion of the airbag.

12. Safety arrangement according to one of Claims 1 to 11, **characterized in that** the airbag can be displaced into the active position by extension of the supporting pillar.

## Revendications

1. Agencement de sécurité pour un véhicule automobile, comprenant un coussin gonflable qui, lors de son activation, est déplacé depuis sa position de repos dans la porte (2) du véhicule automobile jusque dans sa position active au-dessus d'un appui de porte (4), le coussin gonflable activé (10, 17, 18, 24) s'étendant entre un montant A (5) et un autre montant de soutien (11, 15, 16, 19, 27) qui, à distance du montant A (5), peut être déplacé hors de la structure latérale du véhicule automobile jusque dans une position active dépassant vers l'intérieur au-delà de l'appui de porte (4), **caractérisé en ce que** le coussin gonflable (10, 17, 18, 24) forme, dans la position active, un rideau qui s'étend au-dessus de l'appui de porte (4) jusqu'à la hauteur de la zone de la tête d'un occupant du véhicule, l'arête supérieure du coussin gonflable s'étendant entre l'extrémité supérieure du montant de soutien et l'extrémité supérieure du montant A, le coussin gonflable (10, 17, 18, 24) étant soutenu dans la position active via plusieurs liaisons (13) faisant office de paliers antagonistes, d'une part sur le montant A (5) ou sur un cadre de vitre latéral (7) relié au montant A (5), et d'autre part via plusieurs liaisons (14) faisant office de paliers antagonistes aux montants de soutien (11, 15, 16, 19, 27), et dans lequel le montant A (5) ou le cadre de vitre latéral (7) relié au montant A (5) et les montants de soutien (11, 15, 16, 19, 27) comportent des gorges de guidage dans lesquelles sont guidées les liaisons (13, 14) qui tiennent le coussin gonflable (10, 17, 18, 24) au niveau de ses côtés longitudinaux.

2. Agencement de sécurité selon la revendication 1, **caractérisé en ce que**, lorsque le coussin gonflable (10, 17, 18, 24) est activé, au moins une entretoise transversale (20, 21), qui s'étend entre le montant A (5) ou le cadre de vitre latéral (7) relié au montant A (5) et le montant de soutien (17), est agencée sur le côté du coussin gonflable (18) détourné de l'occupant.

3. Agencement de sécurité selon la revendication 2, **caractérisé en ce que** les entretoises transversales (20, 21) s'étendent en diagonale entre le montant A (5) ou le cadre de vitre latéral (7) relié au montant A (5) et le montant de soutien (19).

4. Agencement de sécurité selon la revendication 3, **caractérisé en ce que** les entretoises transversales (20, 21) se croisent.

5. Agencement de sécurité selon la revendication 4, **caractérisé en ce que** les entretoises transversales (20, 21) sont reliées de façon articulée l'une à l'autre au niveau de leur point de croisement (22).

6. Agencement de sécurité selon l'une des revendications 1 à 5, **caractérisé en ce que** le coussin d'air activé (18, 24) est retenu par son côté longitudinal antérieur en direction de circulation sur le montant A (5) ou sur le cadre de vitre latéral (7) relié au montant A (5) et sur un cadre transversal supérieur (25) de la vitre avant (26).

7. Agencement de sécurité selon l'une des revendications 1 à 6, **caractérisé en ce que** le montant de soutien (27) présente au moins une branche de palier antagoniste (29) qui dépasse transversalement, qui s'étend au-delà des liaisons (14), et qui engage le coussin d'air (24) par l'arrière.

8. Agencement de sécurité selon la revendication 7, **caractérisé en ce que** la branche de palier antagoniste (29) est agencée à l'extrémité (28) du montant de soutien (27) côté tête.

9. Agencement de sécurité selon l'une des revendications 1 à 8, **caractérisé en ce que** le montant de soutien (11) est guidé et maintenu dans sa position active sur un montant B (8).

10. Agencement de sécurité selon l'une des revendications 1 à 9, **caractérisé en ce que** le cousin gonflable (10, 17, 18, 24) est formé par plusieurs tronçons en forme de tube (12a-g) en rangée les uns contre les autres, une liaison (13, 14) étant associée à chaque tronçon en forme de tube (12a-g) du côté de l'extrémité.

11. Agencement de sécurité selon l'une des revendications 1 à 10, **caractérisé en ce que** le montant de soutien est déplaçable par expansion du coussin gonflable jusque dans la position active.

12. Agencement de sécurité selon l'une des revendications 1 à 11, **caractérisé en ce que** le coussin gonflable est déplaçable jusque dans la position active par déploiement du montant de soutien.
